# EUROPÄISCHE PATENTSCHRIFT

(11) **EP 1 718 484 B1**
(45) Veröffentlichungstag und Bekanntmachung des Hinweises auf die Patenterteilung: **19.12.2012**
(21) Anmeldenummer: 05715026.0
(22) Anmeldetag: 25.02.2005
(51) Int. Cl.: B60H 1/00

(54) **LICHTSENSOR**
LIGHT SENSOR
CAPTEUR DE LUMIERE

(30) Priorität: 25.02.2004 DE 102004009172
(43) Veröffentlichungstag der Anmeldung: 08.11.2006
(73) Patentinhaber: EPCOS AG, 81669 München (DE)
(72) Erfinder: BALZER, Peter, 10969 Berlin (DE); BARD, Oliver, 14612 Falkensee (DE); KLOIBER, Gerald, A-8073 Feldkirchen (AT); KUBIAK, Michael, 10319 Berlin (DE); ZIMMERMANN, Gero, 13509 Berlin (DE)
(74) Vertreter: Epping - Hermann - Fischer
(86) Internationale Anmeldenummer: PCT/DE2005/000322
(87) Internationale Veröffentlichungsnummer: WO 2005/082652

(56) Entgegenhaltungen:
- EP-A- 1 262 747
- DE-A1- 3 821 743
- US-A- 5 455 415
- US-B1- 6 310 338

## Beschreibung

Die Erfindung betrifft einen Lichtsensor. Der Lichtsensor dient insbesondere dazu, in Abhängigkeit von der Position einer Lichtquelle in Bezug auf den Lichtsensor ein elektrisches Signal auszugeben.

Aus der Druckschrift EP 0 350 866 B1 ist ein Lichtsensor bekannt, bei dem zwischen einem Fotodetektor und einem Lichtmodulator ein Lichtdiffusor zum diffusen Ausbreiten des auf den Sensor einfallenden Lichts angeordnet ist.

Aus den Druckschriften US 5455415, US 6310338, EP 1262747 und DE 3821743 sind Lichtsensoren bekannt, bei denen die einfallende Lichteinstrahlung erfasst wird.

Es ist Aufgabe der vorliegenden Erfindung, einen Lichtsensor anzugeben, dessen Ausgangssignal in Abhängigkeit von der Position der Lichtquelle besonders gut eingestellt werden kann.

Aufgabe wird gelöst durch einen Lichtsensor nach Patentanspruch 1. Vorteilhafte Ausgestaltungen des Lichtsensors sind Gegenstand von Unteransprüchen.

Es wird ein Lichtsensor angegeben, der zur Erfassung der Position einer Lichtquelle relativ zum Lichtsensor geeignet ist. Der Lichtsensor umfasst mindestens ein optisches Element zur Beeinflussung der Ausbreitungsrichtung von Licht, wobei dieses Element so gestaltet ist, dass im wesentlichen keine diffuse Streuung des auf den Lichtsensor einfallenden Lichts auftritt. Das Vermeiden der diffusen Streuung hat den Vorteil, dass die einfallenden Lichtstrahlen keinem unkontrollierten Ablenkungseffekt unterliegen, wodurch die positionsabhängige Bestrahlung des im Lichtsensor enthaltenen Fotodetektors besonders gut definiert werden kann.

Dementsprechend ist ein Lichtsensor vorgesehen, bei dem von außen auf den Sensor eingestrahltes Licht im wesentlichen ohne Streuung auf einen Fotodetektor fällt. Dies bedeutet, dass keine bewusst in den Strahlengang eingebrachte Streuzentren vorgesehen sind. Im Strahlengang befinden sich lediglich Streuzentren, die herstellungsbedingt unvermeidlich sind.

Der Lichtsensor enthält einen Fotodetektor, der wenigstens einen Teil des von der Lichtquelle abgestrahlten Lichtes vorzugsweise in ein elektrisches Signal umwandelt. Dieses elektrische Signal kann von einer geeigneten Schaltung weiter verarbeitet werden und beispielsweise zur Bestimmung der Position der Lichtquelle verwendet werden.

Um die Lichtmenge, die auf den Fotodetektor eingestrahlt wird, in Abhängigkeit vom Einfallswinkel des von der Lichtquelle abgestrahlten Lichtes zu modulieren, ist ein Lichtmodulator vorgesehen. Der Lichtmodulator ist dabei so ausgebildet, dass er im wesentlichen eine direkte Optik darstellt, d.h., dass durch den Lichtmodulator gestrahltes Licht auf dem Wege eines direkten Strahlengangs von der Lichtquelle zum Fotodetektor gelangen kann.

Insbesondere ist bei dem hier angegebenen Lichtsensor kein diffuses Element bzw. kein Streuelement vorgesehen, an dem Lichtstrahlen gestreut würden. Demnach hat der hier angegebene Lichtsensor den Vorteil, dass die Winkelcharakteristik des Sensors nur mit Hilfe des Lichtmodulators ausreichend exakt definiert werden kann und keine Abhängigkeit der Charakteristik von mehr oder weniger unkontrollierten Streuprozessen besteht.

In einer besonders vorteilhaften Ausführungsform des Lichtsensors ist dieser mit einer Abdeckkappe versehen. Eine solche Abdeckkappe hat den Vorteil, dass der Lichtsensor gegen äußere Umwelteinflüsse geschützt werden kann. Solche Umwelteinflüsse sind beispielsweise Schmutz, Staub oder auch aggressive Gase.

Darüber hinaus hat die Abdeckkappe noch den Vorteil, dass sie an Designwünsche angepasst werden kann, was insbesondere bei Verwendung des Sensors in einem Automobil von Vorteil ist.

Der hier beschriebene Lichtsensor kann also die Position einer Lichtquelle, beispielsweise die Position der Sonne erfassen. Darüber hinaus kann bei einem geeigneten Fotodetektor, der abhängig von der eingestrahlten Lichtintensität ein entsprechendes elektrisches Signal generiert, auch die Intensität der Sonnenstrahlung erfasst werden. Mithilfe des Fotodetektors lässt sich ein elektrisches Ausgangssignal erzeugen, welches beispielsweise zur Steuerung einer Klimaanlage in einem Kraftfahrzeug dienen kann. Mithilfe des hier beschriebenen Lichtsensors lässt sich das subjektive Wärmeempfinden der Fahrzeuginsassen, hervorgerufen durch die Einstrahlung der Sonne, nachbilden. In Abhängigkeit von der Position der Sonne zum Fahrzeug bzw. zum Fotodetektor liefert dieser verschiedene Ausgangssignale. Des weiteren sind die Signale des Fotodetektors mit der Intensität der Sonne korreliert. Es ist darüber hinaus noch wünschenswert, in bestimmten Fällen eine vorgegebene Ausgangssignalkurve zu erreichen.

Die Kappe ist vorzugsweise für die vom Fotodetektor erfasste Lichtwellenlänge transparent. Darüber hinaus kann die Abdeckkappe aber auch farbig gestaltet sein, um bestimmte Wünsche im Rahmen von Designkonzepten zu erfüllen.

In einer anderen Ausführungsform des Lichtsensors ist im Strahlengang des auf den Fotodetektor treffenden Lichts ein Absorptionselement angeordnet. Ein solches Absorptionselement absorbiert vorzugsweise diejenige Lichtwellenlänge, bei der der Fotodetektor sensitiv ist. Dementsprechend erfüllt das Absorptionselement den Zweck, eine Übersteuerung des Fotodetektors zu vermeiden. Das Absorptionselement kann vorzugsweise im Strahlengang zwischen der Kappe und dem Fotodetektor angeordnet sein. Das Absorptionselement kann aber auch außerhalb der Kappe angeordnet sein.

In einer besonderen Ausführungsform des Lichtsensors ist das Absorptionselement ein Plättchen, das zwischen dem Fotodetektor und dem Modulator angeordnet ist.

In einer anderen Ausführungsform des Lichtsensors ist der Lichtmodulator ein transparenter Block, der mit einer Vertiefung versehen ist. Vorzugsweise ist diese Vertiefung angeordnet auf der dem Fotodetektor abgewandten Seite des Lichtmodulators. Die Vertiefung kann also angeordnet sein auf der Lichteinfallsseite des Lichtmodulators.

In einer anderen Ausführungsform des Lichtsensors weist die Vertiefung scheibenartig übereinanderliegende Bereiche auf, wobei jeder dieser Bereiche eine kegelstumpfförmige Seitenwand aufweist. Besonders vorzugsweise können unterschiedliche Bereiche Seitenwände aufweisen, die nach unten, also zum Fotodetektor hin, einen größer werdenden Winkel mit einer normalen, die senkrecht auf dem Fotodetektor steht, einschließen. Dadurch kann von außen auf den Lichtmodulator einfallendes Licht an den Seitenwänden der Kegelstümpfe reflektiert werden und somit für jeden Einfallswinkelbereich eine bestimmte Intensität für die Beleuchtung des Fotodetektors vorgesehen werden.

Durch die schrägen Flächen der Kegel werden bestimmte Einfallswinke bevorzugt zum Detektor geleitet. Über die Größe der Mantelfläche der Kegel bzw. Kegelstümpfe kann die Amplitude des Detektorsignals für diesen Einfallswinkel gesteuert werden.

Im Folgenden wird die Erfindung anhand von Ausführungsbeispielen und den dazugehörigen Figuren näher erläutert.
- Figur 1: zeigt einen Lichtsensor in einem schematischen Querschnitt.
- Figur 2: zeigt den Lichtmodulator aus Figur 1 in einer vergrößerten, querschnittsartigen Darstellung.
- Figur 3: zeigt ein nicht zur Erfindung gehörendes Beispiel für einen Lichtmodulator in einem schematischen Querschnitt.
- Figur 4: zeigt eine Signalausgangskurve für einen Fotodetektor in Abhängigkeit von der Elevation α.
- Figur 5: zeigt die Erläuterung zum Begriff Elevation.
- Figur 6: zeigt ein weiteres Beispiel für einen Lichtmodulator.

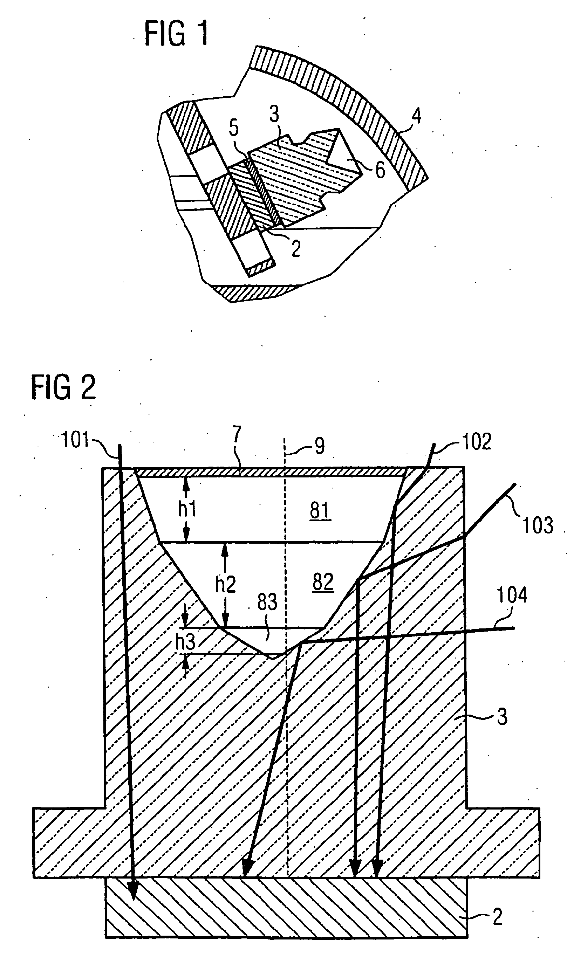

Figur 1 zeigt einen Lichtsensor, bei dem auf einer Trägervorrichtung ein Fotodetektor 2 aufgebracht ist. Der Lichtsensor ist abgedeckt mit einer Abdeckkappe 4. Sowohl die Abdeckkappe 4 als auch das Trägerelement sind lediglich ausschnitthaft gezeigt. Die Abdeckkappe 4 besteht im wesentlichen aus einem Material mit homogener Schichtdicke, ist jedoch nicht zwingend sphärisch ausgebildet. D.h., dass die Kappe 4 von der Halbkugelform abweichen kann. Die Abdeckkappe 4 ist zwar nicht als Lichtmodulator gedacht, jedoch lässt sich nicht mit Sicherheit ausschließen, dass eine winkelabhängige Intensitätsänderung an der Kappe 4 des einfallenden Lichtes stattfindet.

Auf der Oberseite des Fotodetektors 2 ist ein Absorptionselement 5 angebracht, das die Aufgabe hat, den Wellenlängenbereich, in dem der Fotodetektor 2 sensitiv ist, in Hinsicht auf das einfallende Licht derart zu schwächen, dass der Fotodetektor 2 nicht übersteuert wird.

Das Absorptionselement 5 muss nicht unbedingt in Form eines Plättchens vorliegen. Es kann auch in Form eines Vergusses des Fotodetektors vorliegen. Beispielsweise kann das Absorptionselement 5 im Infrarotbereich eine starke Absorption aufweisen, wenn der Fotodetektor im Infraroten seine höchste Empfindlichkeit aufweist.

Die Abdeckkappe 4 ist vorzugsweise transparent für das von außen von der Lichtquelle einfallende Licht. Im Verhältnis zum Lichtmodulator 3 bewirkt die Abdeckkappe 4 allenfalls eine sehr geringe Modulation des Lichtes.

Es ist darüber hinaus ein Lichtmodulator 3 vorgesehen, der von einer Lichtquelle auf den Lichtsensor einfallendes Licht derart moduliert, dass das vom Sensor ausgegebene Signal vom Einfallswinkel des Lichtes auf den Lichtsensor abhängt.

Der Lichtmodulator 3 ist mit einer Vertiefung 6 versehen.

Der Lichtmodulator 3 kann vorzugsweise aus einem transparenten Material bestehen, beispielsweise aus Plexiglas oder auch aus Glas.

Figur 2 zeigt den Lichtmodulator aus Figur 1 in einer vergrößerten Darstellung. Es ist zu erkennen, dass der Lichtmodulator einen transparenten Block umfasst, wobei auf der Oberseite eine Vertiefung 6 angeordnet ist. Die Vertiefung 6 ist mit einem nichttransparenten Deckel 7 abgedeckt. Die Vertiefung 6 lässt sich einteilen in scheibenartig übereinanderliegende Bereiche 81, 82, 83, wobei jeder dieser Bereiche eine definierte Höhe h₁, h₂, h₃ aufweist. Ferner ist jeder dieser Bereiche 81, 82, 83 hinsichtlich der Formgebung seiner Seitenwand mit einem Kegelstumpf zu vergleichen. Dabei haben die Kegelstümpfe verschiedene Neigungswinkel ihrer Seitenflächen relativ zur Senkrechten 9, die senkrecht auf der empfindlichen Oberfläche des Fotodetektors 2 steht. Anhand der in Figur 2 gezeigten Strahlengänge 101, 102, 103, 104 kann die Wirkungsweise des Lichtmodulators 3 erläutert werden:

Licht mit einem sehr großen Einfallswinkel zur Senkrechten 9, das sich entlang des Strahlengangs 104 ausbreitet, wird von der untersten Scheibe durch Totalreflexion an der Grenzfläche Block/Vertiefung (welche im allgemeinen mit Luft gefüllt ist) reflektiert auf die Oberfläche des Fotodetektors 2. Dementsprechend wird Licht, das im Bezug auf die Senkrechte 9 einen flacheren Winkel aufweist, und das entlang des Strahlengangs 103 verläuft an der ersten Grenzfläche Luft/Block gebrochen und an der zweiten Grenzfläche Block/Luft reflektiert auf die Oberfläche des Fotodetektors 2 hin. Entsprechendes gilt für noch flacher zur Senkrechten 9 einfallendes Licht, das dem Strahlengang 102 folgt. Senkrecht einfallendes Licht verläuft entsprechend dem Strahlengang 101 und wird lediglich seitlich der Vertiefung 6 ohne weitere Umwege direkt auf die Oberfläche des Fotodetektors 2 geleitet.

Gemäß Figur 2 gibt es also für jeden Bereich 81, 82, 83 einen bestimmten Einfallswinkelbereich, in dem Licht von diesem Kegelstumpf auf den Fotodetektor 2 geleitet wird. Durch die Variation der Höhenverhältnisse, also durch die Variation der Höhen h₁, h₂ bzw. h₃ kann das Ausgangssignal des Fotodetektors in Abhängigkeit vom Einfallswinkel des Lichts sehr genau und differenziert eingestellt werden. Eine weitere Differenzierung kann auch dadurch erfolgen, dass die Anzahl der Teilbereiche 81, 82, 83 weiter erhöht wird und dadurch eine größere Anzahl von Winkelbereichen ermöglicht wird.

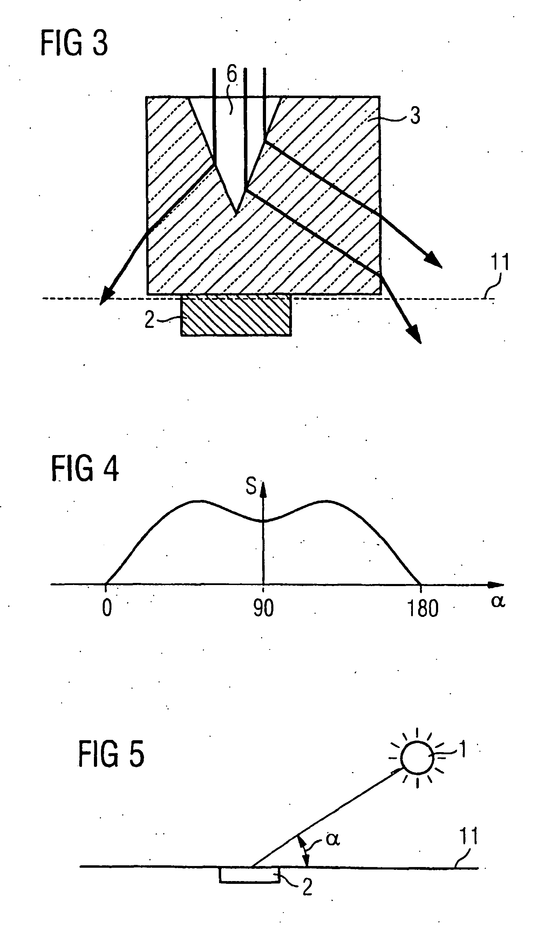

Figur 3 zeigt eine weitere Ausführungsform für einen Lichtmodulator 3, der ebenfalls mit einer Vertiefung versehen ist, bei dem jedoch der nichttransparente Deckel 7 aus Figur 2 fehlt. Eine solche Anordnung kann dazu verwendet werden, senkrecht auf die Oberfläche des Fotodetektors 2 fallendes Licht gänzlich oder zumindest zu einem großen Anteil vom Fotodetektor 2 fernzuhalten, wodurch ein entsprechendes Minimum in der Sensitivitätskurve des Fotodetektors realisiert werden kann (vgl. hierzu auch Figur 4). In Figur 3 ist noch die Ebene der Sensoroberfläche 11 gezeigt, die zur weiteren Bezugnahme in der Beschreibung verwendet wird.

Figur 4 zeigt die Abhängigkeit des Signals S des Fotodetektors von der Elevation α der Lichtquelle. Der Begriff der Elevation α ist erläutert in Figur 5, wo eine Lichtquelle 1, beispielsweise eine Sonne, dargestellt ist. Von der Lichtquelle 1 auf den Fotodetektor 2 eingestrahltes Licht bildet eine Winkel α mit der Ebene 11 der Sensoroberfläche. Dieser Winkel α entspricht der Elevation.

In Figur 4 ist im Bereich α = 90° ein Minimum des Sensorsignals S zu erkennen, was durch das Weglassen des Deckels 7 in Figur 3 resultiert.

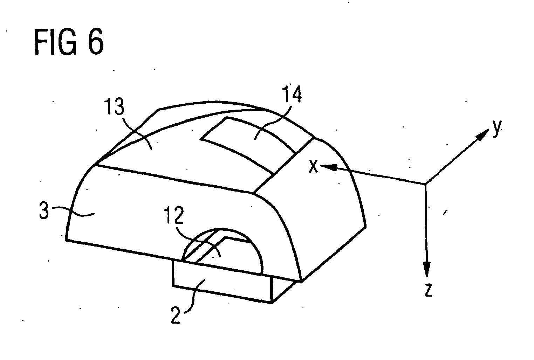

Figur 6 zeigt eine weitere Ausführungsform für einen Lichtmodulator 3. Im Beispiel von Figur 6 ist der Lichtmodulator 3 über einem Fotodetektor 2 angeordnet. Ein Teil der Oberfläche des Fotodetektors 2 liegt dabei frei, da der Lichtmodulator 3 an dieser Stelle eine halbzylinderförmige Aussparung 12 aufweist. Der Lichtmodulator 3 selbst weist seinerseits in etwa die Form eines Halbzylinders auf. Jedoch ist auf der Oberseite des Lichtmodulators 3 noch ein Schrägschliff 13 vorgesehen, der zur Einstellung des Ausgangssignals des Detektors in Abhängigkeit vom Einfallswinkel genutzt wird. Es können ferner auf dem Lichtmodulator Flächen vorgesehen sein, die Licht absorbieren. Figur 6 zeigt eine solche Absorberfläche 14, die auf den Schrägschliff 13 aufgedruckt ist. Sie kann aber auch aufgeklebt sein.

Die Erfindung ist nicht auf das dargestellte und beschriebene Ausführungsbeispiel beschränkt. Sie umfaßt vielmehr auch alle fachmännischen Abwandlungen sowie Teil- und Unterkombinationen der beschriebenen Maßnahmen. Insbesondere der Lichtmodulator kann beliebige Forman annehmen.

### Bezugszeichenliste

- 1: Lichtquelle
- 2: Fotodetektor
- 3: Lichtmodulator
- 4: Abdeckkappe
- 5: Absorptionselement
- 6: Vertiefung
- 7: Deckel
- 81, 82, 83: scheibenförmiger Bereich
- 9: Senkrechte
- 101, 102, 103, 104: Strahlengang
- h₁, h₂, h₃: Höhe
- S: Signal
- α: Elevation
- 11: Ebene der Sensoroberfläche
- 12: Aussparung
- 13: Schrägschliff
- 14: Absorberfläche

## Patentansprüche

1. Lichtsensor zum Erfassen der Position einer Lichtquelle (1)
- mit einem Fotodetektor (2),
- mit einem Lichtmodulator (3) zum Modulieren der auf den Fotodetektor (2) einfallenden Lichtmenge,
- wobei der Lichtmodulator (3) als direkte Optik ausgebildet ist, so dass durch den Lichtmodulator (3) gestrahltes Licht auf dem Wege eines direkten Strahlengangs von der Lichtquelle (1) zum Fotodetektor (2) gelangen kann,
- wobei der Lichtmodulator (3) ein transparenter Block ist, der von der Lichteinlassseite her mit einer Vertiefung (6) versehen ist,
- wobei die Vertiefung(6) scheibenartig übereinanderliegende Bereiche (81, 82, 83) aufweist, von denen jeder kegelstumpfförmige Seitenwände aufweist, wobei die Kegelstümpfe verschiedene Neigungswinkel der Seitenfläche relativ zur empfindlichen Fläche des Fotodetektors (2) haben, so dass die einfallende Lichtmenge in Abhängigkeit von der Elevation (α) des Lichts der Lichtquelle (1) relativ zum Sensor ist und
- wobei die Vertiefung (6) mit einem nichttransparanten Deckel (7) abgedeckt ist.

2. Lichtsensor nach Anspruch 1,
der mit einer Abdeckkappe (4) versehen ist.

3. Lichtsensor nach einem der Ansprüche 1 oder 2,
bei dem im Strahlengang (101, 102, 103, 104) des einfallenden Lichts ein Absorptionselement (5) angeordnet ist.

4. Lichtsensor nach einem der Ansprüche 1 bis 3,
bei dem das Absorptionselement (5) ein Plättchen zwischen dem Fotodetektor (2) und dem Modulator (3) ist.

## Claims

1. Light sensor for detecting the position of a light source (1),
- comprising a photodetector (2),
- comprising a light modulator (3) for modulating the quantity of light incident on the photodetector (2),
- wherein the light modulator (3) is designed as a direct optic, such that light radiated through the light modulator (3) can pass by way of a direct optical path from the light source (1) to the photodetector (2),
- wherein the light modulator (3) is a transparent block provided with a cavity (6) from the light admission side,
- wherein the cavity (6) comprises regions (81, 82, 83) lying one above another in a disc-like manner, each of which regions has sidewalls in the shape of truncated cones, wherein the truncated cones have different angles of inclination of the side area relative to the sensitive area of the photodetector (2), such that the amount of light incident is in dependence on the elevation (α) of the light from the light source (1) relative to the sensor, and
- wherein the cavity (6) is covered with a non-transparent cover (7).

2. Light sensor according to Claim 1,
which is provided with a covering cap (4).

3. Light sensor according to either of Claims 1 and 2, wherein an absorption element (5) is arranged in the optical path (101, 102, 103, 104) of the incident light.

4. Light sensor according to any of Claims 1 to 3, wherein the absorption element (5) is a disc between the photodetector (2) and the modulator (3).

## Revendications

1. Capteur de lumière pour enregistrer la position d'une source lumineuse (1),
- avec un photo détecteur (2)
- avec un modulateur de lumière (3) pour moduler la quantité de lumière incidente sur le photo détecteur (2),
- dans lequel le modulateur de lumière (3) est réalisé sous la forme d'une optique directe de telle sorte que de la lumière rayonnée à travers le modulateur de lumière (3) peut arriver sur le trajet d'un chemin des rayons direct de la source lumineuse (1) au photo détecteur (2),
- dans lequel le modulateur de lumière (3) est un bloc transparent pourvu d'un renfoncement (6) du côté de la lumière incidente,
- dans lequel le renfoncement (6) présente des zones de tranches superposées (81, 82, 83) dont chacune comporte des parois latérales de forme tronconique, les troncs de cône ayant des angles d'inclinaison différents de la surface latérale par rapport à la surface sensible du photo détecteur (2), de telle sorte que la quantité de lumière incidente dépende de l'élévation (α) de la lumière de la source lumineuse (1) par rapport au capteur, et
- dans lequel le renfoncement (6) est couvert d'un couvercle (7) non-transparent.

2. Capteur de lumière selon la revendication 1, pourvu d'un écran de protection (4).

3. Capteur de lumière selon une des revendications 1 ou 2, dans lequel un élément absorbant (5) est disposé dans le chemin des rayons (101, 102, 103, 104) de la lumière incidente.

4. Capteur de lumière selon une des revendications 1 à 3, dans lequel l'élément absorbant (5) est une plaquette disposée entre le photo détecteur (2) et le modulateur (3).
